# EUROPEAN PATENT APPLICATION

(11) **EP 2 579 259 A2**
(43) Date of publication of application: **10.04.2013**
(21) Application number: 12161523.1
(22) Date of filing: 27.03.2012
(51) Int. Cl.: G11B 27/11

(54) **Method for playing back data stored on a recording medium and recording medium playback device using the same**

(30) Priority: 06.10.2011 KR 20110102005
(71) Applicant: Samsung Electronics Co., Ltd., Suwon-si, Gyeonggi-do, 443-742 (KR)
(72) Inventor: Bak, Bong-gil, Gyeonggi-do (KR); Kim, Min-seok, Gyeonggi-do (KR)
(74) Representative: Hancox, Jonathan Christopher

(57) **Abstract**

A method for playing back data stored on a recording medium and a recording medium play back apparatus using the same are provided. A method includes determining S310 a section of data to be updated, among the data stored on the recording medium, transmitting S320 information of the section of data to be updated to an external server, receiving S330 new data to substitute for the section of data to be updated from the external server; and substituting S340 the section of data to be updated with the new data and playing back the substituted new data at a point when playing back the section of data to be updated starts.

## Description

The invention relates to a method for playing back data stored on a recording medium, and more specifically, to updating data within a selected section, playing back the updated data, and a recording medium playback device using the same.

An optical disc saving data was introduced in the 1970s as the laserdisc. The optical disc subsequently developed into the compact disc (CD), the digital versatile disc (DVD), and the Blu-ray disc. These forms of the optical disc can save more than 50 gigabytes (GB) of data.

Along with the digital imaging and compressing technologies, coding technologies, and semiconductor technologies, the optical disc recording technologies include expanded recording size of the recording medium. Expanded recording size has played a large role in developing the optical disc.

For example, when saving one movie, the Blu-ray disc usually includes 300 to 400 files. If the device playing back the recording medium is connected to an external server, the device playing back the movie may access the server provided by movie producers and download files of the playback disc. The recording medium playback device may substitute the files included in the recording medium with the downloaded files, and play back the downloaded files.

However, since technologies process the data in a file unit, it is difficult to apply an updating operation to large data files.

Thus, a method for updating the data section of the file stored on the recording medium is required.

Exemplary embodiments may overcome the above disadvantages and/or other disadvantages not described above.

Exemplary embodiments provide a method for playing back data stored on a recording medium and a recording medium playback apparatus using the same, in which a section to be updated is determined among the data stored on a recording medium, information of the section to be updated is transmitted to an external server, new data to substitute the section to be updated is received from the external server, and with the new data is substituted and played back at a point of playing back the section to be updated.

According to one aspect, there is provided a method for playing back data stored on a recording medium of a recording medium playback apparatus, the method including determining a section of data to be updated among the data stored on the recording medium, transmitting information of the section of data to be updated to an external server, receiving new data to substitute the section to be updated from the external server, and substituting the section of data to be updated with the new data and playing back the substituted new data at a point when playing back the section of data to be updated from starts.

The determining may include determining a data section of the data stored on the recording medium as the section of data to be updated, if the data section contains a fault.

The information of the section of data to be updated may include information of the recording medium, information of a file containing the fault, and location information of the data section having the fault.

The transmitting may include converting the location information of the data section having the fault into an offset value and transmitting the offset value to the external server.

The method may additionally include storing the new data received from the external server, and the playing back comprises playing back the stored new data at the point when playing back the section of data to be updated starts.

If a predetermined data update condition is met, the determining may include determining a data section, corresponding to the predetermined data update condition, to be the section of data to be updated.

The method may additionally include, if the section of data to be updated and the new data have different sizes from each other, calculating a whole data size including a size of the new data.

The recording medium may be read only.

According to another aspect, there is provided a recording medium playback apparatus including a reading unit which reads data stored on the recording medium, a communicating unit which performs communication with an external server, a decoding unit which decodes the data stored on the recording medium, and a control unit which determines a section of data to be updated, among the data stored on the recording medium, transmits information of the section to be updated to the external server, and if receiving new data to substitute the section of data to be updated from the external server, controls the decoding unit to substitute the section of data to be updated with the new data and play back the substituted new data at a point when playing back the section of data to be updated starts.

The control unit may determine a data section of the data stored on the recording medium as the section of data to be updated, if the data section contains a fault.

The information of the section to be updated may include information of the recording medium, information of a file containing the fault, and location information of the data section having the fault.

The control unit may control the communication unit to convert the location information of the data section having the fault into an offset value and transmit the result of the offset value to the external server.

The recording medium playback apparatus may additionally include a storage unit which stores the new data received from the external server, wherein the control unit controls the decoding unit to decode the stored new data at the point when playing back the section of data to be updated starts.

If a predetermined data update condition is met, the control unit may determine a data section, corresponding to the predetermined data update condition, to be the section of data to be updated.

If the section to be updated and the new data have different sizes from each other, the control unit may calculate a whole data size which includes a size of the new data.

The recording medium may be read only.

According to an aspect of another exemplary embodiment, there is provided a method for playing back a recording medium of a recording medium playback apparatus, the method including determining a section to be updated among the data stored on the recording medium, generating new data to substitute the section to be updated, and substituting the section of data to be updated with the new data and playing back the substituted new data at a point when playing back the section of data to be updated starts.

The above and/or other aspects will be more apparent by describing certain exemplary embodiments with reference to the accompanying drawings, in which:
FIG. 1 is a diagram illustrating a system including a recording medium playback device and a server according to an exemplary embodiment;
FIG. 2 is a block diagram of a recording medium playback device according to an exemplary embodiment; and
FIGS. 3 to 6 are flowcharts illustrating a method for playing back a recording medium of the recording medium playback device according to various exemplary embodiments.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments can be carried out without those specifically defined matters.

Also, well-known functions or constructions are not described in detail since they would obscure the inventive concept with unnecessary detail.

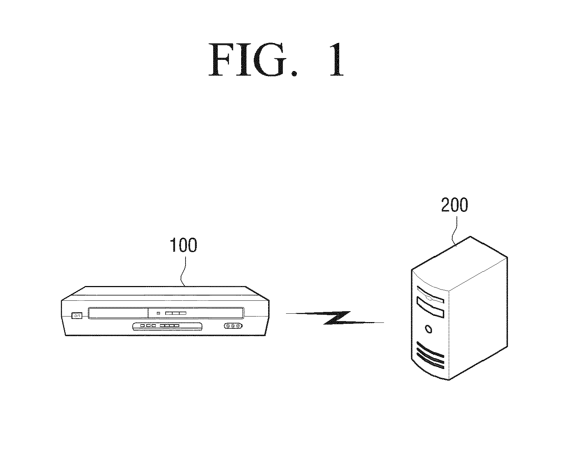

FIG. 1 is a diagram illustrating a system including a recording medium playback device and a server according to an exemplary embodiment.

Referring to FIG. 1, the system for inserting new data to a data section and playing back the new data includes a recording medium playback device 100 and an external server 200 (hereinafter, "server"). The recording medium playback device 100 may be a Blu-ray disc or a recording medium playback device having ultra definition, but is not limited thereto.

The recording medium playback device 100 may read the data on the recording medium. While reading out the data, the recording medium playback device 100 determines if there is a section of the stored data to be updated.

The section to be updated may be a data section having faults in stored data of the recording medium. In particular, the recording medium playback device 100 may determine whether the data has faults while playing back the data. If faults are determined in some data section, the recording medium playback device 100 may determine that the data section has to be updated.

The data section to be updated may also be a data section that meets predetermined conditions. In particular, the recording medium playback device 100 may determine if data meet the predetermined conditions (e.g., determine if the data section has a bit rate over a predetermined value). If certain data section meets the predetermined conditions, the recording medium playback device 100 may determine the data section has to be updated.

After determining that there is the section to be updated, the recording medium playback device 100 may transmit information of the section to be updated to the server 200. The information of the section to be updated may include recording medium information, file information including the section to be updated, and location of the section to be updated.

If the information of the section to be updated is transferred to the server 200, the server 200 may determine new data to be transmitted to the recording medium playback device 100 based on the information of the section to be updated. The server 200 may transmit the new data to the recording medium playback device 100. The server 200 may be a server corresponding to the recording medium (e.g., server provided by the recording medium producers), but is not limited thereto. In one embodiment, the new data may substitute the data of the section to be updated, but is not limited thereto. Alternatively, the new data may be processing orders of a processor to generate new data to substitute the data of the section to be updated.

If the server 200 transmits the new data to substitute the data of the section to be updated, the recording medium playback device 100 may receive the new data. The new data may have a size that is the same as or larger than that of the data of the section to be updated. If the new data size is different from the data size of the section to be updated, the recording medium playback device 100 may calculate a size of a whole data in which the new data is inserted. The calculated whole data size may be outputted on an external display, enabling a user to find the whole data size.

The recording medium playback device 100 may save the received new data on the storage such as a random access memory (RAM).

If new data is transmitted, the recording medium playback device 100 playing back the data stored on the recording medium may substitute and play the new data at the point of playing back the section to be updated. In particular, when the point comes to playing back the section to be updated, the recording medium playback device 100 may stop reading the data stored on the recording medium, and play back the new data stored on the storage. After completing reading of the new data, the recording medium playback device 100 may play back the data stored on the recording medium at the ending point of the section to be updated.

Thus, the recording medium playback device 100 may play back data without faults by substituting the data of the section to be updated with the new data and playing back the new data.

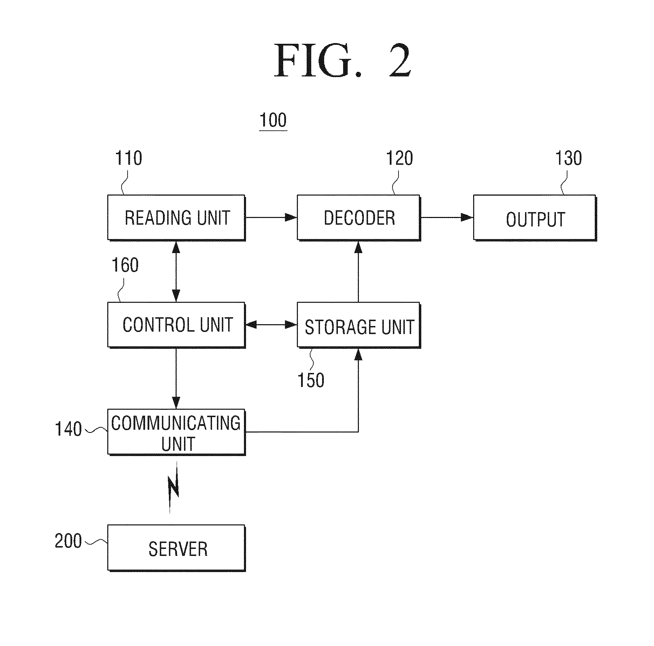

FIG. 2 is a block diagram illustrating a recording medium playback device according to an exemplary embodiment. Referring to FIG. 2, the recording medium playback device 100 may include a reading unit 110, a decoder 120, an output 130, a communicating unit 140, a storage unit 150, and a control unit 160.

The reading unit 110 may read the data of the recording medium inserted to the recording medium playback device 100. If data has faults, i.e., if data is not readable while reading the data of the recording medium, the reading unit 110 may transmit information of the data having faults to the control unit 160. The recording medium inserted to the recording medium playback device 100 may be read only.

The decoder 120 may decode the data read by the reading unit 110.

The output 130 may output the data decoded by the decoder 120. If the decoded data is image data, the output 130 may be a display. Further, if the decoded data is audio data, the output 130 may be a speaker. Although not mentioned, the output 130 may be other forms of output devices according to other embodiments.

The communicating unit 140 may perform communication with the server 200. In particular, the communicating unit 140 may transmit information of the section to be updated to the server 200 according to the controlling of the control unit 160. Further, the communicating unit 140 may receive the new data to substitute the data of the section to be updated.

The storage unit 150 may save data and programs to control the recording medium playback device 100. In particular, the storage unit 150 may save the new data transmitted from the server 200.

The storage unit 150 may be a volatile memory, i.e., a random access memory (RAM) or may be a non-volatile memory, i.e., a hard disc, or may be a combination.

The control unit 160 may control the overall operations of the recording medium playback device 100. In particular, the control unit 160 may determine the section to be updated of the recording medium, substitute the new data to the data of the section to be updated, and play back the new data.

In particular, the control unit 160 of the recording medium playback device 100 may determine the section to be updated, i.e., section to be substituted by new data. The section to be updated may be data section having faults, or may be data section meeting predetermined conditions.

If receiving information of the data section having faults from the reading unit 110, the control unit 160 may determine the data section having faults to be the section to be updated. The control unit 160 may receive the data section having faults and data size.

Further, if a certain data section meets a predetermined condition, the control unit 160 may determine the certain data section meeting the predetermined condition as the section to be updated. For example, the section having a bit rate more than a predetermined value, i.e., the section having the data with possible depletions in an image or an audio quality, may be determined to be the section to be updated.

Although some examples of the section to be updated are given above, other sections are also applicable according to the embodiment. For instance, the data section selected by a user may be updated.

If the section to be updated is determined, the control unit 160 controls the communicating unit 140 to transmit information of the section to be updated to the server 200. The information of the section to be updated may include recording medium information, information of a file having section to be updated, and the location information of the section to be updated. For instance, the recording medium information may include a recording medium providers or titles. The information of a file having the section to be updated may include a file name having the section to be updated or a file size. The location information of the section to be updated may include a start point of the section to be updated or the size.

The control unit 160 may transmit physical address information to the server 200 as the location information of the section to be updated. The control unit 160 may also convert the location information of the section to be updated to the offset values and transmit the offset values to the server 200.

If the new data is transmitted from the server 200, the control unit 160 may cause the new data to be transmitted to the storage unit 150.

If the data size of the section to be updated is different from that of the new data, the control unit 160 may calculate the whole data size after substituting the new data. For instance, if the whole data size is 100 megabytes (MB), the data size of the section to be updated is 10 MB, and the new data size is 20 MB, the control unit 160 may calculate the whole data size to 110 MB after inserting the new data to the section to be updated.

While decoding the data of the recording medium, the control unit 160 may determine the section to be updated. If determining that there is the section to be updated, the control unit 160 may control so that the reading of the data of the recording medium is stopped at the start point of the section to be updated, and the new data stored on the storage unit 150 is read out and decoded.

If reading the new data completes, the control unit 160 may control the reading unit 110 and the decoder 120 to read and decode the data stored on the recording medium at the end point of the section to be updated.

Accordingly, the recording medium playback device 100 may substitute specific data having faults or depletions in image quality without having to replace the whole data file.

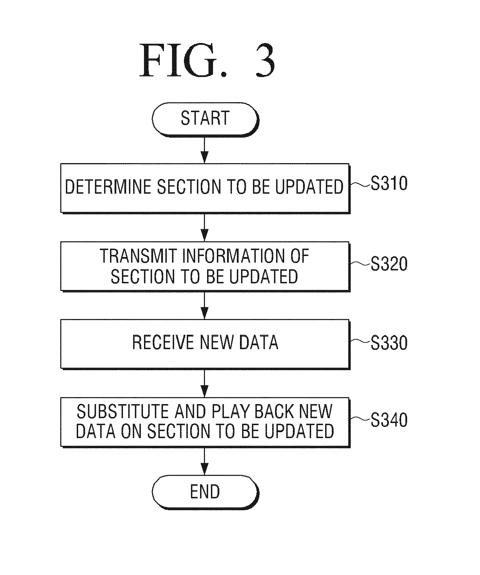

Referring to FIGS. 3 to 6, a method for playing back a recording medium according to various exemplary embodiments will be explained.

FIG. 3 is a flowchart provided to explain a method for playing back a recording medium of the recording medium playback device 100 according to an exemplary embodiment.

The recording medium playback device 100 determines the section to be updated while reading the data (S310). The section to be updated may be section having faults or may be section meeting predetermined conditions, such as data section having values more than predetermined bit rate values.

The recording medium playback device 100 transmits information of the section to be updated to the server 200 (S320). The information of the section to be updated may include recording medium information, information of a file having section to be updated, and location information of the section to be updated.

If the new data is transmitted from the server, the recording medium playback device 100 receives the new data (S330). The recording medium playback device 100 may save the received new data on the storage.

While playing back the data stored on the recording medium, the recording medium playback device 100 substitutes the existent data with the new data and plays back the new data on the section to be updated (S340). In particular, the recording medium playback device 100 may determine the section to be updated while playing back the data stored on the recording medium. If determining that there is the section to be updated, the recording medium playback device 100 may stop reading the data stored on the recording medium at the start point of the section to be updated, and read and play back the new data. After completing reading the new data, the recording medium playback device 100 may read and play back the data stored on the recording medium at the end point of the section to be updated.

Using the recording medium playback method explained above, the recording medium playback device may play the faultless data by substituting only the data of the section to be updated having a size less than the whole data size, without replacing the whole data file.

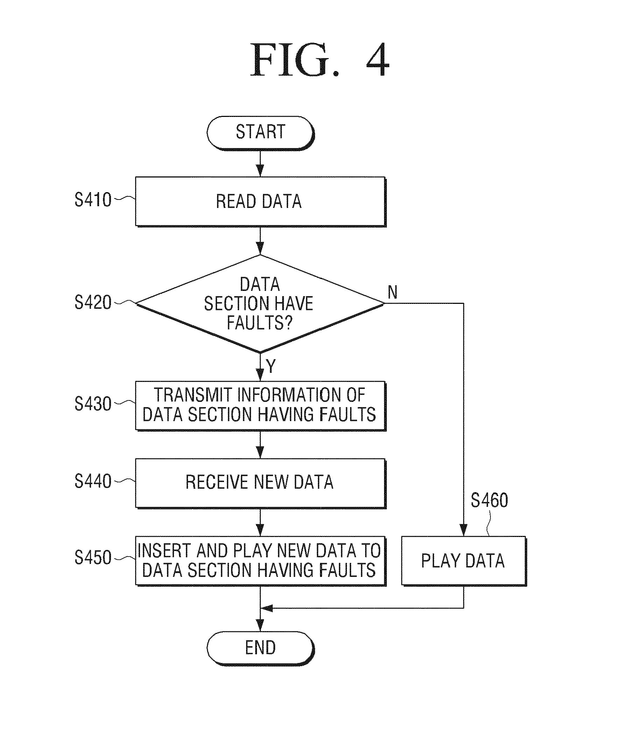

FIG. 4 is a flowchart provided to explain a method for playing back a recording medium by substituting the data section having faults with the new data according to an exemplary embodiment.

First, the recording medium playback device 100 reads the data stored on the recording medium (S410).

The recording medium playback device 100 then determines the data section having faults while reading the recording medium (S420). The data section having faults may be attached with foreign substance or damaged so that data are not readable therefrom.

If it is determined that the data does not have faults (S420-N), the recording medium playback device 100 plays the data stored on the recording medium (S460).

If it is determined that the data has faults (S420-Y), the recording medium playback device 100 transmits the information of the data section having faults to the server 200 (S430). The information of the data section having faults may include recording medium information such as recording medium providers or titles, information of files having faults information such as files delivering images, or location information of the data section having faults such as point or size of the data section having faults.

If the server transmits the new data, the recording medium playback device 100 may receive the new data to substitute the data section having faults (S440). The recording medium playback device 100 may save the received new data on the storage unit.

Next, the recording medium playback device 100 inserts the new data in the data section having faults and plays back the new data (S450). In particular, if the recording medium playback device 100 determines the section having faults while playing back the data of the recording medium, the recording medium playback device 100 may stop reading the data having faults. The recording medium playback device 100 may read and play back the new data, and after completing reading the new data, read and play back the data stored on the recording medium after the end point of the section having faults.

Using the recording medium playing method explained above, if some data section have faults, a user may receive the data having a size less than the whole data size from the server 200 to play back the faultless data by substituting the data having faults.

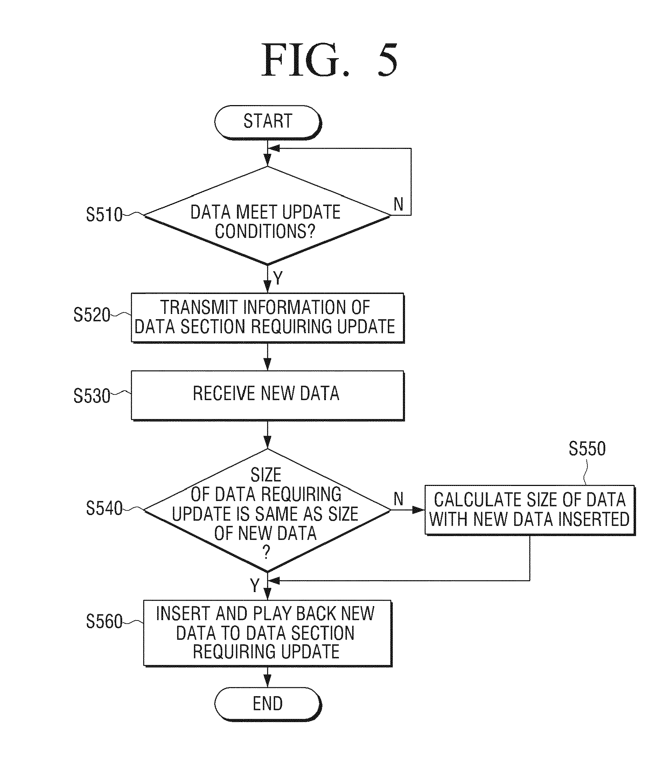

FIG. 5 is a view provided to explain a method for playing back a recording medium by substituting data section meeting predetermined update conditions according to an exemplary embodiment.

First, the recording medium playback device 100 determines if there is a data section meeting predetermined update conditions in the data stored on the recording medium (SS10). The predetermined update conditions may be a bit rate exceeding a predetermined value according to which image or audio data are not played back with satisfactory quality.

If it is determined that a certain data section meets predetermined update conditions (S510-Y), the recording medium playback device 100 transmits the information of the data section requiring data update to the server 200 (S520). The information of the data section requiring update may include recording medium information such as recording medium providers or titles, information of the files containing the data requiring update such as the names of the video files, or location information of the data section requiring update such as a point or size of the data section requiring update.

The recording medium playback device 100 receives new data to substitute the data section requiring update form the external server 200 (S530).

The recording medium playback device 100 then determines whether the size of the new data is same as the size of the data section requiring update (S540).

If it is determined that the new data size is same as the size of the data section requiring update (S540-Y), the recording medium playback device 100 inserts the new data to the data section requiring update and plays the new data without calculating the data section size having inserted new data (S560).

If it is determined that the new data size is not same as the size of the data section requiring update (S540-N), the recording medium playback device 100 calculates the size of the updated data having the inserted new data (S550). Next, the recording medium playback device 100 inserts the new data to the data section requiring update and plays the new data (S560).

According to an exemplary embodiment, if the size of the data section requiring update is o, the recording medium playback device 100 may only insert the new data at point where update is required, thereby providing a data insertion effect. Further, if the size of the new data is o, the recording medium playback device 100 may only insert the new data with size o at point where update is required, thereby resulting in an effect of eliminating the data requiring update.

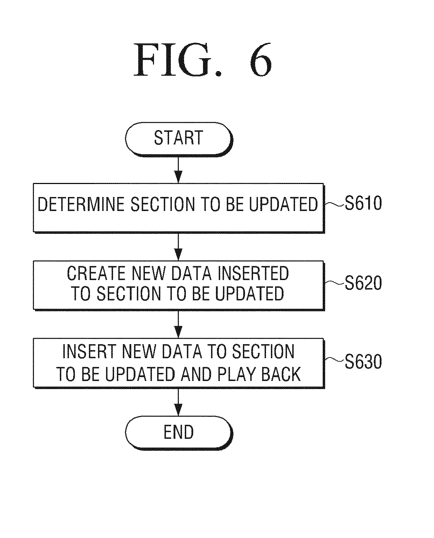

FIG. 6 is a flowchart provided to explain a method for playing back a recording medium, which generates new data as substitute data instead of receiving the data from the external device and plays back the generated new data, according to an exemplary embodiment.

First, the recording medium playback device 100 determines the section to be updated (S610). The section to be updated may include data section having faults or the data section meeting predetermined update conditions.

Next, the recording medium playback device 100 generates new data to substitute for the section to be updated (S620). In particular, if determining that there is the section to be updated, the recording medium playback device 100 may generate processing orders to generate new data to be inserted to the section to be updated. The recording medium playback device 100 may generate the new data according to the processing orders.

The recording medium playback device 100 then inserts the new data to the data section to be updated and plays the new data (S630).

Accordingly, using the method for playing back recording medium according to an embodiment, the recording medium playback device 100 may generate substitute new data and play back the generated new data without accessing external servers.

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for playing back data stored on a recording medium of a recording medium playback apparatus, the method comprising:
determining a section of data to be updated among data stored on the recording medium;
transmitting information of the section to be updated to an external server;
receiving new data to substitute the section to be updated from the external server; and
substituting the section to be updated with the new data and playing back the substituted new data at a point of playing back the section to be updated.

2. The method of claim wherein the determining comprises determining a data section of the data stored on the recording medium as the section to be updated, if the data section contains a fault.

3. The method of claim 2, wherein the information of the section to be updated comprises information of the recording medium, information of a file containing the fault and location information of the data section having the fault.

4. The method of claim 3, wherein the transmitting comprises converting the location information of the section having the fault into an offset value and transmitting the offset value to the external server.

5. The method of any of claims 1 to 4, further comprising storing the new data received from the external server, and the playing back comprises playing back the stored new data at the point of playing back the section to be updated.

6. The method of any of claims 1 to 5, wherein, if a predetermined data update condition is met, the determining comprises determining a data section corresponding to the predetermined data update condition to be the section to be updated.

7. The method of claim 6, further comprising, if the section to be updated and the new data have different sizes from each other, calculating a whole data size including a size of the new data.

8. The method of any of claims 1 to 7, wherein the recording medium is read only.

9. A recording medium playback apparatus, comprising:
a reading unit which reads data stored on the recording medium;
a communicating unit which performs communication with an external server;
a decoding unit which decodes the data stored on the recording medium; and
a control unit which determines a section to be updated among the data stored on the recording medium, transmits information of the section to be updated to the external server, and if receiving new data to substitute the section to be updated from the external server, controls the decoding unit to substitute with the new data and play back the substituted new data at a point of playing back the section to be updated.

10. The recording medium playback apparatus of claim 9, wherein the control unit determines a data section of the data stored on the recording medium as the section to be updated, if the data section contains a fault.

11. The recording medium playback apparatus of claim 10, wherein the information of the section to be updated comprises information of the recording medium, information of a file containing the fault and location information of the data section having the fault.

12. The recording medium playback apparatus of claim 11, wherein the control unit controls the communication unit to convert the location information of the section having the fault into an offset value and transmit the offset value to the external server.

13. The recording medium playback apparatus of any of claims 9 to 12, further comprising a storage unit which stores the new data received from the external server, wherein the control unit controls the decoding unit to decode the stored new data at the point of playing back the section to be updated.

14. The recording medium playback apparatus of any of claims 9 to 13, wherein, if a predetermined data update condition is met, the control unit determines a data section corresponding to the predetermined data update condition to be the section to be updated.

15. The recording medium playback apparatus of any of claims 9 to 14, wherein, if the section to be updated and the new data have different sizes from each other, the control unit calculates a whole data size including a size of the new data.
